**Europäisches Patentamt**

**European Patent Office**

**Office européen des brevets**

(19)

(11) Veröffentlichungsnummer: **0 509 225 B1**

(12) # EUROPÄISCHE PATENTSCHRIFT

(45) Veröffentlichungstag der Patentschrift: **27.09.95**

(51) Int. Cl.6: **B60T 13/26**, B60T 8/00, B60T 8/60

(21) Anmeldenummer: **92103946.7**

(22) Anmeldetag: **07.03.92**

(54) Verfahren zum Betreiben einer Druckluftbremsanlage für Kraftfahrzeuge.

(30) Priorität: **19.04.91 DE 4112845**

(43) Veröffentlichungstag der Anmeldung:
**21.10.92 Patentblatt 92/43**

(45) Bekanntmachung des Hinweises auf die
Patenterteilung:
**27.09.95 Patentblatt 95/39**

(84) Benannte Vertragsstaaten:
**DE FR IT SE**

(56) Entgegenhaltungen:
**EP-A- 0 187 901**
**DE-A- 3 212 930**
**DE-A- 3 226 074**
**DE-A- 3 543 331**
**DE-A- 3 932 245**

(73) Patentinhaber: **ROBERT BOSCH GMBH**
**Postfach 30 02 20**
**D-70442 Stuttgart (DE)**

(72) Erfinder: **Stumpe, Werner, Dipl.-Ing.**
**Ferdinand-Hanauer-Strasse 62**
**W-7000 Stuttgart 50 (DE)**
Erfinder: **Wrede, Juergen, Dipl.-Ing.**
**Seeschwalbenweg 1**
**W-7000 Stuttgart 50 (DE)**

## Beschreibung

### Stand der Technik

Die Erfindung geht aus von einem Verfahren zum Betreiben einer Druckluftbremsanlage nach der Gattung des Patentanspruchs 1 oder 2. Eine derartige Bremsanlage ist bekannt (DE-A-32 12 930).

Bei solchen Druckluftbremsanlagen wird der vom Bremsventil ausgesteuerte Druck in eine Bremskraft am Fahrzeugrad umgewandelt. Obwohl an sich an allen Fahrzeugrädern die gleiche Bremskraft zu erwarten wäre, sind durch mechanische Verluste und durch Toleranzen an den einzelnen Radbremsen für das Anlegen der Bremsbakken unterschiedliche Anlegedrücke notwendig. Außerdem sind diese Anlegedrücke auch zeitlich durch Verschleiß, Wartungszustand o. dgl. veränderlich. Durch ähnliche Einflüsse sowie insbesondere Reibwertschwankungen der Bremsbeläge kommen auch unterschiedliche Bremskraft-Anstiege für die einzelnen Radbremsen zustande.

Für das Erzielen eines gleichmäßigen Belagverschleißes sowie für das gleichzeitige Einsetzen und für die gleiche Stärke der Bremsung an allen Rädern des Fahrzeuges wäre es wünschenswert, wenn sich entsprechende Kennlinien in einem Bremskraft-Bremsdruck-Diagramm deckten. Setzt man aber andererseits gegebene unterschiedliche Kennlinien für jedes Fahrzeugrad voraus, so zeigt die DE-A-32 26 074 bereits eine Lösung des Problems auf, indem die Bremskraft als Regelgröße angenommen wird und bei gleicher Bremskraft und unterschiedlichen Kennlinien der Drücke an den Radbremsen dann in die einzelnen Bremszylinder unterschiedliche Bremsdrücke eingeregelt werden.

Es besteht desweiteren das Problem, daß es technisch sehr aufwendig ist, die Bremskraft an jedem Fahrzeugrad exakt zu messen. Anders dagegen ist es verhältnismäßig einfach, eine genaue Bremsdruck-Messung im Bremszylinder mittels Drucksensor gemäß DE-A-32 12 930 oder eine genaue Wegmessung an der Bremszylinder-Kolbenstange durchzuführen. Den Hub eines Kolbens in einer Kolben-Zylinder-Anordnung mit einem Wegsensor zu messen, ist aus EP-A-0 412 443 bekannt.

### Aufgabe und Lösung der Erfindung

Der Erfindung liegt die Aufgabe zugrunde, die aufgezeigten Nachteile zu vermeiden und ein Verfahren zum Betreiben einer Druckluftbremsanlage zu entwickeln, das auf einfache Weise eine Ermittlung des Anlegedruckes der einzelnen Radbremsen möglich macht, um dann die Anlegedrücke zu kompensieren.

Die Aufgabe wird gemäß der Erfindung bei einem gattungsgemäßen Verfahren zum Betreiben einer Druckluftbremsanlage durch die kennzeichnenden Merkmale des Patentanspruchs 1 und des Patentanspruchs 2 gelöst.

### Zeichnung

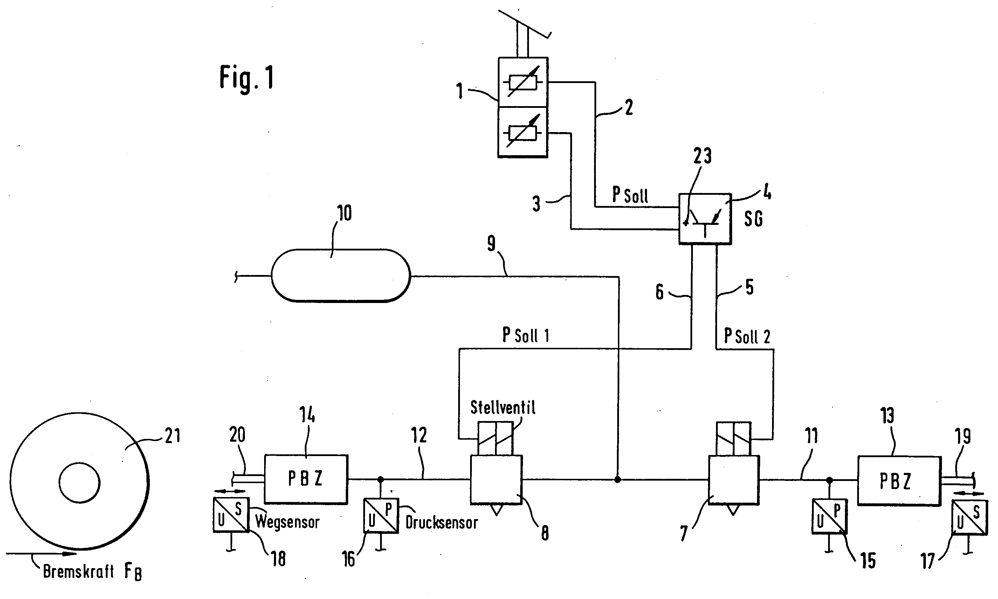

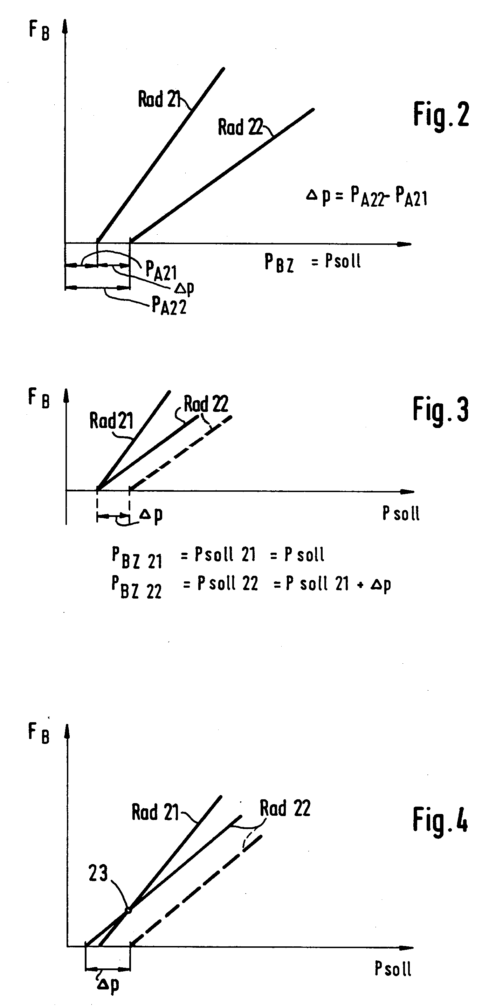

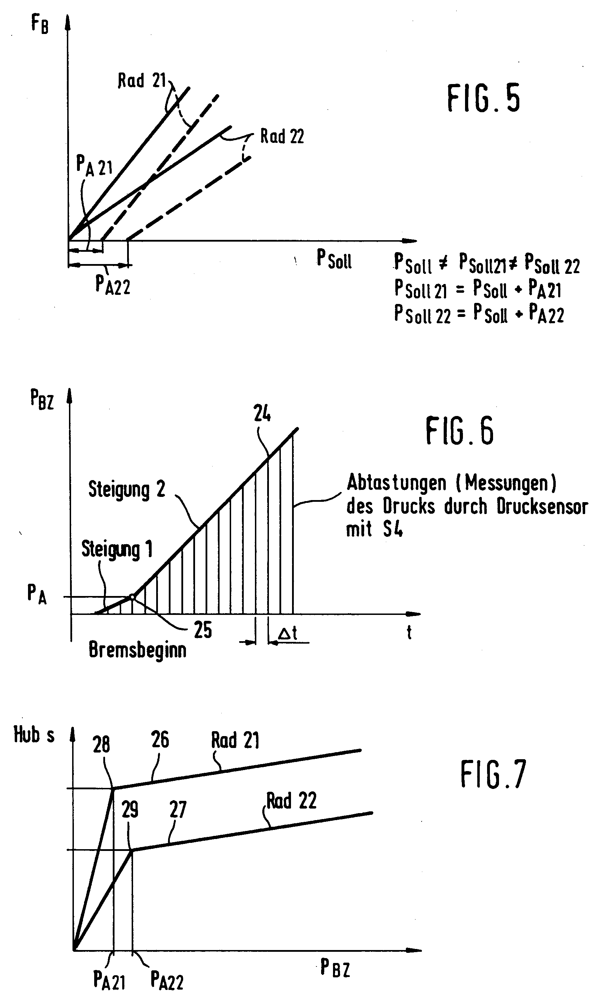

Ein Ausführungsbeispiel der Erfindung ist in der Zeichnung dargestellt und in der nachfolgenden Beschreibung näher erläutert. Es zeigen: Figur 1 eine Druckluftbremseinrichtung in Schema-Darstellung, Figur 2 ein Diagramm über einen bekannten Verlauf der Bremsdrücke für zwei Fahrzeugräder mit unterschiedlichen Anlegedrücken, Figur 3 ein Diagramm, das die Kompensation der Anlegedrücke der beiden Radbremsen darstellt, Figur 4 und 5 Varianten der Figur 3, Figur 6 ein Diagramm über eine Abtastung der Drücke im elektronischen Steuergerät mit Knickpunkt beim Anlegen der Bremsen und Figur 7 ein Hubabgriff an den Kolbenstangen der Bremszylinder als Wegmessung ebenfalls mit Knickpunkt beim Bremsenanlegen.

### Beschreibung des Ausführungsbeispiels

Eine Druckluft-Bremsanlage hat ein zweikreisig ausgebildetes Bremsventil 1, das über eine Trittplatte betätigbar ist. An das Bremsventil 1 ist über zwei Leitungen 2 und 3 ein elektronisches Steuergerät 4 angeschlossen und vom Steuergerät 4 führen zwei Steuerleitungen 5 und 6 zu je einem Stellventil 7 und 8. Jedes Stellventil 7 bzw. 8 hat eine Vorratsleitungs-Verbindung 9 zu einem Vorratsbehälter 10 und von jedem Stellventil 7 und 8 nimmt eine Bremsleitung 11 bzw. 12 ihren Ausgang, die zu je einem Bremszylinder 13 bzw. 14 führt.

An jeden Bremszylinder 13 bzw. 14 sind ein Drucksensor 15 bzw. 16 und ein Wegsensor 17 bzw. 18 angeschlossen, von denen der Drucksensor 15 bzw. 16 den Bremsdruck am Bremszylinder 13 bzw. 14 und der Wegsensor 17 bzw. 18 den Weg mißt, den eine Kolbenstange 19 bzw. 20 des Bremszylinders 13 bzw. 14 zurücklegt. Dazu kommt, daß im elektronischen Steuergerät 4 ein Zeitwertgeber 23 vorgesehen ist.

Wenn vom Bremsventil 1 ein elektrischer Wert für einen Solldruck vorgegeben wird, so gelangt dieser zum Steuergerät 4. Solldruck und Zeitverlauf werden dort gespeichert und vom Steuergerät 4 aus wird das Stellventil 7 bzw. 8 angesteuert, worauf dieses einen bestimmten Bremsdruck zum Bremszylinder 13 bzw. 14 gelangen läßt. Der Drucksensor 15 bzw. 16 und der Wegsensor 17 bzw. 18 geben ihre Signale an das Steuergerät 4. Beim Erreichen eines Bremsdrucks, der zum Anlegen der Bremsen führt, wird ein Anlegedruck pA ermittelt. Durch Erkennen (Messen und Rechnen) unterschiedlicher Anlegedrück pA1 und pA2 an und $p_{A22}$ an jeder Radbremse wird ein auftretender Unterschied an den einzelnen Rädern in dem elektronischen Steuergerät 4 erkannt. In dem Diagramm nach der Figur 2 sind die Bremskraft $F_B$ auf der Ordinate und die Bremszylinderdrücke $p_{BZ}$ auf der Abszisse aufgetragen, außerdem sind die Anlegedrücke $p_{A21}$ und $p_{A22}$ eingezeichnet. Es wird angenommen, daß der vorgegebene Solldruck $p_{soll}$ im Bremszylinder als Bremsdruck $p_{BZ} = p_{soll}$ eingeregelt wird. Im Steuergerät 4 werden die auftretenden Unterschiede rechnerisch ausgeglichen.

Eine derartige Gleichschaltung (Kompensation) ist im Diagramm nach der Figur 3 gezeigt. Dabei wird der vom Bremsventil 1 vorgegebene Bremsdruck $p_{soll}$ mit einem aus dem für das jeweilige Fahrzeugrad gemessenen Anlegedruck $p_A$ korrigiert zu dem radspezifischen Solldruck $p_{soll21}$ oder $p_{soll22}$ entsprechend den Kennlinien für die Räder 21 und 22. Es ist zu erkennen, daß nach dem Abgleich beide Räder 21 und 22 vom gleichen $p_{soll}$ an eine Bremskraft abgeben. Allerdings sind jetzt die Sollwerte $p_{soll21}$ und $p_{soll22}$ und auch die entsprechenden Bremszylinderdrücke $p_{BZ21}$ und $p_{BZ22}$ unterschiedlich im Bremszylinder von Rad 21 und Rad 22. Dabei ist die Steigung der beiden Kennlinien weiterhin unterschiedlich.

Beispiel:

Im Ausgangszustand (Figur 2) hat das Rad 21 einen Anlegedruck $p_{A21}$ = 0,3 bar, das Rad 22 einen Anlegedruck $p_{A22}$ = 0,5 bar. Der Solldruck vom Bremswertgeber $p_{soll}$ ist gleich dem Bremszylinderdruck $p_{BZ}$ in Rad 21 und Rad 22. Bei $p_{soll}$ = 0,3 bar beginnt die Radbremse 21 gerade eine Bremskraft $F_B$ abzugeben, während die Radbremse 22 noch nicht anliegt. Bei $p_{soll}$ = 0,5 bar bremst Radbremse 21 schon mit 0,2 bar, während Radbremse 22 gerade erst anliegt. Nun mit Kompensation (Figur 3):
Der Unterschied der Anlegedrücke
$p_{A22} - p_{A21}$ = 0,5 bar - 0,3 bar = 0,2 bar ist entsprechend vorstehender Ausführungen ermittelt und im Steuergerät 4 bekannt. Nun wird Rad 22 mit einem um 0,2 bar höheren Druck beaufschlagt als Rad 21. Der Solldruck vom Bremswertgeber $p_{soll}$ ist in diesem Fall gleich dem radindividuellen Solldruck $p_{soll21}$ für Rad 21 und ist auf der Abszisse aufgetragen. $p_{soll21}$ ist auch gleich dem Bremszylinderdruck $p_{B21}$ in Rad 21. Rad 22 hat nach der Kompensation jedoch einen anderen radindividuellen Solldruck, nämlich
$p_{soll22} = p_{BZ22}$, der sich um $\Delta p$ = 0,2 bar von $p_{soll}$ unterscheidet. Bei $p_{soll}$ = 0,5 bar liegen Rad 21 und Rad 22 gerade an (Beginn $F_B$-Anstieg), d.h.
$p_{soll21} = p_{BZ21}$ = 0,5 bar,

$p_{soll22} = p_{BZ22}$ = 0,7 bar.
Bei $p_{soll}$ = 0,7 bar gilt:
$p_{soll21} = p_{BZ21}$ = 0,7 bar und
$p_{soll22} = p_{BZ22}$ = 0,9 bar.
Die Anlegedrücke für beide Räder sind unverändert 0,3 bar bzw. 0,5 bar.

Für andere Fahrzeugräder z.B. an der Hinterachse des Fahrzeugs oder am Anhänger gilt das Gleiche.

Was bei einer solchen Bremskraftregelung in manchen Fällen noch als störend empfunden wird, sind die unterschiedlichen Kennliniensteigungen für Rad 21 und Rad 22. Um trotzdem die Bremskräfte insbesondere im unteren, für den Verschleiß maßgebenden Druckbereich unter 2 bis 3 bar einander anzugleichen, ist es möglich, den Anlegedruck für das Rad mit der geringeren Steigung vorzuverlegen, wie die Figur 4 erkennen läßt. Dabei bildet sich ein Schnittpunkt 23, in dessen Bereich sich die Bremskräfte der beiden Räder 21 und 22 am idealsten zueinander verhalten.

Es ist sogar möglich, die kompensierten Solldrücke in unmittelbare Nähe der Ordinaten zu verlegen und auf diese Weise Ungleichheiten zu eliminieren. Einen entsprechenden Bremskraftverlauf stellt die Figur 5 dar.

Um gemäß der Erfindung im elektronischen Steuergerät 4 für jede Radbremse während des Betriebes den Ansprechdruck zu ermitteln, gibt es zwei Möglichkeiten, von denen die erste in der Figur 6 dargestellt ist. Dazu wird mittels des Drucksensors 15 bzw. 16 der Bremsdruckverlauf über der Zeit t abgegriffen. Eine entsprechende Kennlinie 24 ist in der Darstellung mit einzelnen Zeitabschnitten $\Delta t$ markiert. Es ist zu erkennen, daß die Kennlinie 24 im Moment des Bremsen-Anlegens einen Knick 25 macht. Die ermittelten Werte werden im Steuergerät 4 ausgewertet.

Bis zum Anlege-Knick 25 muß vom Bremszylinderdruck $p_{BZ}$ nur die Kraft von Rückholfedern im Bremszylinder 13 bzw. 14 und die Kraft von Rückholfedern der Bremsbacken und die Reibung überwunden werden. Nach dem Anlegen verändert sich der Hub der Kolbenstange 19 bzw. 20 nur noch wenig wegen der relativ hohen Steifigkeit der Konstruktion. Deshalb steigt die Kennlinie 24 nach dem Knickpunkt 25 über der Zeit verhältnismäßig steil an.

Das Steuergerät 4 errechnet aus den ermittelten Steigungen den Anlegedruck $p_A$ und die Zeit t.

Für eine zweite Möglichkeit, den Anlegedruck über der Zeit zu ermitteln, wird gemäß der Erfindung vorgeschlagen, zusätzlich zum Drucksensor 15 bzw. 16 einen Wegsensor 17 bzw. 18 zu verwenden, um den Bremszylinder-Hub an jedem Rad zu messen. Ein entsprechendes Diagramm ist in der Figur 7 dargestellt. Für jedes Rad 21 bzw. 22 ist wieder eine Kennlinie 26 bzw. 27 gezeigt und jede Kennlinie 26 bzw. 27 hat einen Knickpunkt 28 bzw. 29 an der Stelle des Anlegens der Bremse. Dabei wird der Anlegedruck $p_A$ wie zuvor aus dem Schnittpunkt der Kennlinien-Teilstücke ermittelt.

Vorteilhafterweise wird der Anlegedruck $p_A$ aus mehreren Bremsungen ermittelt. Es ist mit Hilfe der Elektronik auch möglich, nur bestimmte Bremsvorgänge zum Ermitteln des Anlegedruckes $p_A$ heranzuziehen. Eine entsprechende Entscheidung kann z.B. im Hinblick auf Druckgradient, Geschwindigkeit des Fahrzeuges o.dgl. getroffen werden. Es ist auch denkbar, für zwei Räder, die gemeinsam von einem Drucksensor 15 bzw. 16 und einem Stellventil 7 bzw. 8 bedient werden, einen mittleren Anlegedruck zu errechnen.

Mit dem Steuergerät 4 kann auch eine Warneinrichtung gekoppelt werden, die dem Fahrer ein Warnsignal vermittelt, sobald der Anlegedruck $p_A$ an einer Radbremse einen vorgegebenen Wert übersteigt.

Die erfindungsgemäße Einrichtung ist sowohl für Trommelbremsen als auch für Scheibenbremsen anwendbar.

## Patentansprüche

1. Verfahren zum Betreiben einer Druckluft-Bremsanlage für Kraftfahrzeuge, mit einem Bremsventil (1) zum Einsteuern von Bremsdruck in diesem nachgeschaltete Bremszylinder (13, 14), mit einem Drucksensor (15, 16) an jedem Bremszylinder zum Messen des eingesteuerten Drucks ($p_{BZ}$) und mit einem elektronischen Steuergerät (4) zum Überwachen und Beeinflussen der Bremswirkung, dadurch gekennzeichnet, daß zur Kompensation der Anlegedrücke ($p_A$) aller Bremszylinder (13, 14) im elektronischen Steuergerät (4) folgende Verfahrensschritte ablaufen:

   1. die von den Drucksensoren (15, 16) ermittelten Druckwerte ($p_{BZ}$) und die zugeordneten Zeitwerte (t) werden gespeichert,
   2. zu den verschiedenen Zeitpunkten wird der Druckanstieg $\Delta p/\Delta t$ an den Bremszylindern (13, 14) berechnet,
   3. abhängig vom Druckanstieg $\Delta p/\Delta t$ des jeweiligen Bremszylinders (13, 14) wird ein beim Anlegen der Bremsen entstehender Knickpunkt (25) im Druckverlauf über der Zeit festgehalten und mit den Daten des Knickpunktes im Druckverlauf über der Zeit des anderen Bremszylinders oder der anderen Bremszylinder verglichen,
   4. die Bremszylinderdrücke ($p_{BZ}$) werden entsprechend der Differenz zwischen den am Knickpunkt (25) ermittelten Anlegedrücken ($p_A$) korrigiert.

2. Verfahren zum Betreiben einer Druckluft-Bremsanlage für Kraftfahrzeuge, mit einem Bremsventil (1) zum Einsteuern von Bremsdruck in diesem nachgeschaltete Bremszylinder (13, 14), mit einem Drucksensor (15, 16) an jedem Bremszylinder zum Messen des eingesteuerten Drucks ($p_{BZ}$), mit einem Wegsensor (17, 18) an jedem Bremszylinder zur Ermittlung des von einer Bremszylinder-Kolbenstange (19, 20) zurückgelegten Bremszylinder-Hubes (s) und mit einem elektronischen Steuergerät (4) zum Überwachen und Beeinflussen der Bremswirkung, dadurch gekennzeichnet, daß zur Kompensation der Anlegedrücke ($p_A$) aller Bremszylinder (13, 14) im elektronischen Steuergerät (4) folgende Verfahrensschritte ablaufen:

   1. die von den Drucksensoren (15, 16) gemessenen Druckwerte ($p_{BZ}$) werden gespeichert,
   2. die von den Wegsensoren (17, 18) ermittelten Bremszylinder-Hübe (s) werden gespeichert,
   3. die Kennlinien des Bremszylinder-Hubes (s) über den Bremszylinder-Druck ($p_{BZ}$) werden ermittelt,
   4. ein beim Anlegen der Bremsen entstehender Knickpunkt (28, 29) im Kennlinienverlauf des jeweiligen Bremszylinders (13, 14) wird festgehalten,
   5. die am Knickpunkt (28, 29) ermittelten Anlegedrücke ($p_A$) der Bremszylinder (13, 14) werden verglichen,
   6. die Bremszylinderdrücke ($p_{BZ}$) werden entsprechend der Differenz zwischen den Anlegedrücken ($p_A$) korrigiert.

3. Verfahren nach Anspruch 1 oder 2, dadurch gekennzeichnet, daß der Anlegedruck ($p_A$) aus mehreren Bremsungen ermittelt wird.

4. Verfahren nach Anspruch 1 oder 2, dadurch gekennzeichnet, daß nur vom Steuergerät (4) ausgewählte Bremsvorgänge, abhängig von Parametern, wie z. B. Druckgradient, zur Ermittlung des Anlegedrucks ($p_A$) herangezogen werden.

5. Verfahren nach einem der Ansprüche 1 bis 4, dadurch gekennzeichnet, daß mit dem Steuergerät (4) eine Warneinrichtung gekoppelt ist, die ein Signal an den Fahrer gibt, wenn ein Anlegedruck ($p_A$) eines Rades (21, 22) einen unzulässig hohen Wert erreicht.

## Claims

1. Method for the operation of an air pressure brake apparatus for motor vehicles, having a brake valve (1) for applying brake pressure to this brake cylinder (13, 14) which is connected downstream, having a pressure sensor (15, 16) on each brake cylinder for measuring the applied pressure ($p_{BZ}$) and having an electronic control device (4) for monitoring and influencing the braking effect, characterized in that in order to compensate the pressures ($p_A$) applied to all the brake cylinders (13, 14) in the electronic control device (4) the following method steps take place:

   1. the pressure values ($p_{BZ}$) determined by the pressure sensors (15, 16) and the associated time values (t) are stored,

   2. the rise $\Delta p/\Delta t$ in pressure at the brake cylinders (13, 14) at the various times is calculated,

   3. a salient point (25) arising during the application of the brakes, in the pressure profile plotted against time is maintained as a function of the rise $\Delta p/\Delta t$ in pressure of the respective brake cylinder (13, 14) and compared with the data of the salient point in the pressure profile plotted against time of the other brake cylinder or the other brake cylinders,

   4. the brake cylinder pressures ($p_{BZ}$) are corrected in accordance with the difference between the applied pressures ($p_A$) identified at the salient point (25).

2. Method for the operation of an air pressure brake apparatus for motor vehicles, having a brake valve (1) for applying brake pressure to this brake cylinder (13, 14) which is connected downstream, having a pressure sensor (15, 16) at each brake cylinder for measuring the applied pressure ($p_{BZ}$), having a travel sensor (17, 18) at each brake cylinder for identifying the brake cylinder travel (s) covered by a piston rod (19, 20) of a brake cylinder and having an electronic control device (4) for monitoring and influencing the braking effect, characterized in that, in order to compensate the pressures ($p_A$) applied to all the brake cylinders (13, 14) in the electronic control device (4) the following method steps take place:

   1. the pressures values ($p_{BZ}$) measured by the pressure sensors (15, 16) are stored,

   2. the brake cylinder travels (s) identified by the travel sensors (17, 18) are stored,

   3. the characteristic curves of the brake cylinder travel (s) plotted against the brake cylinder pressure ($p_{BZ}$) are identified,

   4. a salient point (28, 29), arising during the application of the brakes, in the course of the characteristic curve of the respective brake cylinder (13, 14) is maintained,

   5. the pressures ($p_A$) applied to the brake cylinders (13, 14) identified at the salient point (28, 29) are compared,

   6. the brake cylinder pressures ($p_{BZ}$) are corrected in accordance with the difference between the applied pressures ($p_A$).

3. Method according to Claim 1 or 2, characterized in that the applied pressure ($p_A$) is identified from a plurality of braking operations.

4. Method according to Claim 1 or 2, characterized in that only braking processes selected by the control device (4) as a function of parameters such as e.g. pressure gradient, are used to identify the applied pressure ($p_A$).

5. Method according to one of Claims 1 to 4, characterized in that a warning device which transmits a signal to the driver when an applied pressure ($p_A$) of a wheel (21, 22) reaches an unacceptably high value is coupled to the control device (4).

## Revendications

1. Procédé pour faire fonctionner un système de freinage à air comprimé pour des véhicules à moteur, avec un clapet de frein à air comprimé (1) pour régler la pression de freinage dans le cylindre de frein monté après (13, 14), avec un détecteur de pression (15, 16) sur chaque cylindre de frein pour mesurer la pression réglée ($p_{BZ}$), et avec un appareil électronique de commande (4) pour contrôler et influencer l'action des freins, procédé caractérisé en ce que pour opérer la compensation des pressions d'application ($p_A$) de tous les cylindres de frein (13, 14) dans l'appareil électronique de commande (4), on a le déroulement des séquences suivantes du procédé :

   1. les valeurs des pressions ($p_{BZ}$) détectées par les détecteurs de pression (15, 16) et les valeurs des temps correspondants (t) sont mises en mémoire,

   2. aux différents instants on calcule la pente de la pression $\Delta p/\Delta t$ sur les cylindres de frein (13, 14),

   3. en fonction de la pente de la pression $\Delta p/\Delta t$ du cylindre de frein correspondant (13, 14), on conserve un point d'inflexion (25), qui se produit lors de l'application des freins, dans l'évolution de la pression en fonction du temps, et l'on compare avec les données du point d'inflexion qui se produit dans l'évolution de la pression en fonction du temps de l'autre cylindre de frein ou des autres cylindres de frein.

4. on corrige les pressions des cylindres de frein ($p_{BZ}$) en fonction de la différence entre les pressions d'application ($p_A$) détectées au point d'inflexion (25).

2. Procédé pour faire fonctionner une installation de freinage à air comprimé pour des véhicules à moteur, avec un clapet de frein à air comprimé (1) pour régler la pression de freinage dans le cylindre de frein monté après (13, 14), avec un détecteur de pression (15, 16) sur chaque cylindre de frein pour mesurer la pression réglée ($p_{BZ}$), avec un détecteur de trajet (17, 18) sur chaque cylindre de frein, servant à détecter la course du cylindre de frein (s) parcourue par une tige de piston de cylindre de frein (19, 20) et avec un appareil électronique de commande (4) pour contrôler et influencer l'action des freins, procédé caractérisé en ce que pour opérer la compensation des pressions d'application ($p_A$) de tous les cylindres de frein (13, 14) dans l'appareil électronique de commande (4), on a le déroulement des séquences suivantes du procédé :

1. on met en mémoire les valeurs des pressions ($p_{BZ}$) mesurées par les détecteurs de pression (15, 16),

2. on met en mémoire les courses des cylindres de frein détectées par les détecteurs de trajet (17, 18),

3. on détermine les courbes caractéristiques de la course des cylindres de frein (s) en fonction de la pression des cylindres de frein ($p_{BZ}$),

4. on conserve un point d'inflexion (28, 29) qui se produit lors de l'application des freins, dans le tracé de la courbe caractéristique du cylindre de frein correspondant (13, 14).

5. on compare les pressions d'application ($p_A$) des cylindres de frein (13, 14) que l'on a détectées au point d'inflexion (28, 29),

6. on corrige les pressions des cylindres de frein ($p_{BZ}$) en fonction de la différence entre les pressions d'application ($p_A$).

3. Procédé selon la revendication 1 ou 2, caractérisé en ce que l'on détecte la pression d'application ($p_A$) à partir de plusieurs freinages.

4. Procédé selon la revendication 1 ou 2, caractérisé en ce que l'on n'utilise que des processus de freinage choisis par l'appareil de commande (4) en fonction de paramètres tels que par exemple le gradient de pression, pour détecter la pression d'application ($p_A$).

5. Procédé selon l'une des revendications 1 à 4, caractérisé en ce qu'à l'appareil de commande (4) est couplé un système d'alarme qui délivre au conducteur un signal quand une pression d'application ($p_A$) d'une roue (21, 22) atteint une valeur inacceptablement élevée.

Fig. 1

**1** **2** **23** **4** SG

P Soll

**3**

**10** **9** **6** **5**

P Soll 1  P Soll 2

Stellventil

**20** **14** **12** **11** **13** **19**

PBZ  PBZ

U S  U P  U P  U S

Wegsensor  Drucksensor  **8** **7** **15** **17**

**18** **16**

**21**

Bremskraft F_B

EP 0 509 225 B1

7

$F_B$

Rad 21

Rad 22

Fig.2

$\Delta p = P_{A22} - P_{A21}$

$P_{A21}$

$\Delta p$

$P_{A22}$

$P_{BZ} = P_{soll}$

$F_B$

Rad 21

Rad 22

Fig.3

$\Delta p$

$P_{soll}$

$P_{BZ\ 21} = P_{soll\ 21} = P_{soll}$

$P_{BZ\ 22} = P_{soll\ 22} = P_{soll\ 21} + \Delta p$

$F_B$

Rad 21

Rad 22

Fig.4

23

$\Delta p$

$P_{soll}$

FIG.5

$P_{Soll} \neq P_{Soll21} \neq P_{Soll\ 22}$
$P_{Soll\ 21} = P_{Soll} + P_{A21}$
$P_{Soll\ 22} = P_{Soll} + P_{A22}$

FIG.6

Abtastungen (Messungen) des Drucks durch Drucksensor mit S4

FIG.7